# EUROPEAN PATENT APPLICATION

(11) **EP 4 640 062 A1**
(43) Date of publication of application: **29.10.2025**
(21) Application number: 25172261.7
(22) Date of filing: 24.04.2025
(51) Int. Cl.: A01N 65/04, A01N 65/08, A01N 65/34, A01P 21/00

(54) **PLANT BIOSTIMULATOR AND METHOD OF ITS PRODUCTION**

(30) Priority: 25.04.2024 PL 44842124
(71) Applicant: University of South Bohemia in Ceske Budejovice, 37005 Ceske Budejovice (CZ); University of Life Sciences in Lublin, 20-950 Lublin (PL)
(72) Inventor: Kocira, Slawomir, Lublin (PL); Szparaga, Agnieszka, Koszalin (PL); Bohata, Andrea, Plzen (CZ); Swieca, Michal, Lublin (PL); Krawczuk, Anna, Lublin (PL); Bartos, Petr, Lisov (CZ); Barta, Jan, Dubne (CZ); Sima, Jan, Sobeslav (CZ); Bedrnicek, Jan, Ceske Budejovice (CZ); Lorenc, Frantisek, Tabor (CZ); Olsan, Pavel, Tabor (CZ); Lencova, Jana, Ceske Budejovice (CZ); Stupkova, Adela, Ceske Budejovice (CZ); Jarosova, Marketa, Trhove Sviny (CZ); Perna, Kristyna, Ceske Budejovice (CZ)
(74) Representative: Sedlák, Jirí

(57) **Abstract**

The subject of the invention is a biostimulator of plant origin, obtained using an extractant in the form of water, characterized by the fact that it was obtained from the biomass of the above-ground parts of horsetail *(Equisetum arvense* L.), rose hips *(Rosa canina* L.) and soapwort roots (*Saponaria officinalis* L.), subjected for 30 to 90 s to microwaves with a power of 250 to 750 W generated at low pressure of 75 to 125 Pa. From such activated plant parts, using an extractant in the form of water, a biostimulator was obtained as an infusion, using from 45.0 to 50.0 g of horsetail, from 1.5 to 3.5 g of rose hips and from 0.1 up to 0.5 g of soapwort roots per 1000 ml of water.

## Description

The subject of the invention is a natural plant biostimulator produced using microwaves, using botanical extracts, applied to improve the growth and development of plants.

According to the principles of allelopathy, plants of a given species can produce chemicals that affect the germination, growth and development of other plants.

There are known biostimulants produced from a wide range of raw materials (humic substances, seaweeds, plants, live cultures of microorganisms, protein hydrolysates and amino acids, and synthetic molecules) that can act at various metabolic levels, promoting better absorption, movement and use of nutrients. So far, research is being conducted on the effects of *Moringa extracts oleifera* on the yield quality of crop plants, both at the biochemical, hormonal and genetic levels (Caradonia , F.; Battaglia, V.; · Righi , L.; Pascali , G.; La Torre , A. Plant biostimulant regulatory framework : prospects in europe and current situation at international level , J Plant Growth Regul 2018, 38, 2, 438-448).

There is a known biostimulator for intensifying plant yields described in patent Pat. 242829. The invention describes a biostimulator for intensifying the yield of plants of plant origin, characterized by the fact that it is an aqueous botanical extract from the root of *Arctium lappa* L.

There is a known biostimulating preparation of plant origin and the method of its preparation described in the patent WO2007/052282A1. The invention describes a biostimulant of plant origin and a method of obtaining it. The biostimulant of plant origin is prepared from *Nicotina tabacum* L, through controlled tobacco fermentation. It can be used as a seed dressing and plant spray.

There is a known biostimulator for intensifying plant yields described in patent Pat. 242830. The invention describes a biostimulator for intensifying the yield of plants of plant origin, characterized by the fact that it is an aqueous botanical extract from the seeds of *Linum usitatissimum* L.

There is a known biostimulator for intensifying plant yields described in patent Pat. 242827. The invention describes a biostimulator for intensifying the yield of plants of plant origin, characterized by the fact that it is a botanical extract from the flower of *Verbascum thapsus* L*.*

There is a known use of an aqueous extract from the leaves of *Artemisia absinthium* L*.* described in patent Pat. 242826. The invention describes the use of an aqueous extract from the leaves of *Artemisia absinthium* L. as a biopreparation for intensifying the yield of cultivated plants, in particular plants from the legume family.

There is a known biostimulator for intensifying plant yields described in patent Pat. 242828. The invention describes a biostimulator for intensifying the yield of plants of plant origin, characterized by the fact that it is a botanical extract from the root of *Levisticum officinale* L*.*

There is also a known invention, described in patent CN107372637A, which concerns the type and method of preparing a biostimulator based on animal and plant waste. The biostimulator presented in the patent has the effect of stimulating plant growth and promoting the growth of fruits and roots.

There is a known patent for a plant growth biostimulator based on marine algae PL 230687. The essence of the invention is a plant growth biostimulator containing from 0.1 to 60.0% by mass of supercritical extract from macroalgae biomass *Fucus species ,* obtained using an extractant in the form of supercritical carbon dioxide (CO ₂ ).

*Arctium lappa seed residues* for the production of fertilizer stimulating crop growth is known. The preparation of the fertilizer includes the following steps: crushing the dry *Arctium lappa seeds,* performing subcritical extraction of the *Arctium lappa seeds* using butane, propane or dimethyl ether as media and removing the oil from the *Arctium lappa seeds* to obtain the residue and then further extracting the residue using methanol or ethanol and separation of the extract.

Decoctions and fermented extracts from plants such as common nettle, horsetail, dandelion, banana peels and common tansy are known to be used.

One of the tools for creating new and natural biostimulants is the identification of the potential of natural products of plant origin. The use of these easily available preparations in plant cultivation is cheap and safe. The creation of a new natural plant biostimulator, with the appropriate bioactive potential enabling its foliar and soil application, required a precise multi-aspect approach in the selection of plant species that will allow the extraction process to obtain the most favorable chemical composition and the lowest possible surface tension of the produced product.

The essence of the plant biostimulator for intensifying plant growth and development is that it is obtained from the biomass of the above-ground parts of horsetail (*Equisetum arvense* L.), rose hips (*Rosa canina* L.) and soapwort roots (*Saponaria officinalis* L.), subjected for 30 to 90 s to microwaves with a power of 250 to 750 W generated at a low pressure of 75 to 125 Pa. From such activated plant parts, using an extractant in the form of water, a biostimulator was obtained as an infusion, using from 45.0 to 50.0 g of horsetail, from 1.5 to 3.5 g of rose hips and from 0.1 up to 0.5 g of soapwort roots per 1000 ml of water.

### Biostimulator as an aqueous extract contains:

- macroelements in the following amounts mg/l: Ca: 813.00±14.18 ; K: 2010.00±36.06 ; Mg: 397.67±6.03 ; Na: 5.51±0.04 ; P: 712.11±11.24 ;
- microelements in the following amounts, mg/l: Cu: 0.02±0.00 ; Fe: 0.12±0.02 ; Mn: 1.73±0.03 ; Sr: 3.24±0.03 ; Zn: 0.40±0.02 ;
- polyphenols, total 1299.00±21.23 mg GAB/l;
- amount of reducing sugars, mg GLU/l: 73.66±4.15;
- protein amount, mg BSA/l: 123.16±10.53;
- free amino acids and peptides in the amount of mg LEU/l: 445.07 ±74.91;
- proline amount, mg/l: 43.82±2.06;
- amount of abscisic acid, ng / l: 139.36±6.01;
- 3-indoleacetic acid amount, µg/l: 4.82±0.23;
- gibberellic acid amount, mg/l: 12.96±0.78

### The biostimulator as an aqueous extract is characterized by:

- ability to quench ABTS radicals: 1.14±0.06 mg TE/ml,
- reduction power: 2.28±0.10 mg TE/ml,
- ability to quench hydroxyl radicals: 19.37±1.84 mg TE/ml,
- chelating capacity : 3.22±0.12 mg/ml.
- surface tension: 49.36±1.43 mN /m.

This preparation is a natural, non-toxic product, completely soluble in water.

Polyphenol compounds, amino acids and phytohormones are the most important active compounds in a natural biostimulant that intensifies the growth and development of plants, based on botanical extracts. The plant biostimulating preparation is characterized by the ability to strengthen the specific resistance of plants to abiotic stress due to the concentration of biologically active compounds which, in appropriate concentrations, have a stimulating effect on plant germination and growth.

This biostimulator is in liquid form and is intended for foliar application in plant crops. Working solutions of the biostimulator delivered to plants by spraying are fully absorbed by them.

The plant biostimulating preparation is also characterized by a limited tendency to destabilization. The presented biostimulator can be stored for a short time due to the lack of preservatives. The use of water as an extraction agent, instead of ethanol, methanol or acetone, ensures the creation of a mixture of biologically active compounds, neutral to the environment and suitable for use in organic farming.

The presented biostimulator is also an alternative option for products obtained from tropical plants or marine algae, which reduces the costs associated with the availability and transport of raw materials or products and, consequently, the price of products intended to regulate the growth and development of crop plants.

The subject of the invention was shown in an example illustrating the composition of a plant biostimulator and the effect of foliar application under controlled conditions on the growth of soybean plants.

### Example

Dry biomass from the above-ground parts of horsetail (*Equisetum arvense*), rosehips (*Rosa canina*) and soapwort roots (*Saponaria officinalis*) is exposed to 500 W microwaves generated at a low pressure of 100 Pa for 60 s. A mixture is created from such activated plant parts, from which, using an extractant in the form of water, a biostimulator is obtained as an infusion, using 47.5 g of horsetail, 2.3 g of rose hips and 0.2 g of soapwort roots per 1000 ml of water .

| **Component** | **Contents** |
|---|---|
| **Macronutrients (mg/l)** | |
| Ca | 813.00±14.18 |
| K | 2010.00±36.06 |
| Mg | 397.67±6.03 |
| On | 5.51±0.04 |
| P | 712.11±11.24 |

| **Microelements (mg/l)** | |
|---|---|
| Cu | 0.02±0.00 |
| Fe | 0.12±0.02 |
| Mn | 1.73±0.03 |
| Sr | 3.24±0.03 |
| Sign | 0.40±0.02 |

| **the other ingredients** | |
|---|---|
| polyphenols, mg GAE/l | 1142.50±47.21 |
| reducing sugars, mg GLU/l | 73.66±4.15 |
| protein, mg BSA/l | 123.16±10.53 |
| free amino acids and peptides, mg LEU/l | 445.07 ±74.91 |
| proline, mg/l | 43.82±2.06 |

| **Phytohormones** | |
|---|---|
| abscisic acid, ng/l | 139.36±6.01 |
| acid, µg/l | 4.82±0.23 |
| gibberellic acid, mg/l | 12.96±0.78 |

The produced biostimulator was characterized by antioxidant potential:
- ability to quench ABTS radicals: 1.14±0.06 mg TE/ml,
- reduction power: 2.28±0.10 mg TE/ml,
- ability to quench hydroxyl radicals: 19.37±1.84 mg TE/ml,
- chelating capacity: 3.22±0.12 mg/ml.

The surface tension of the produced plant biostimulator was: 49.36±1.43 mN /m (the surface tension of the water used for extraction was 71.95±0.37 mN /m).

The plant biostimulator with the given composition and parameters is intended for foliar application.

### The effect of using a biostimulator prepared according to the Example under controlled conditions

In 2023, an experiment was carried out to check the effectiveness of the example, a biostimulator to intensify the growth and development of plants. The Abelina soybean variety was chosen as the test plant. The experiment was carried out in controlled conditions (phytotron) in four repetitions, 20 plants for each repetition and combination. The biostimulator was applied foliarly twice (on the 14th and 21st day after emergence) in an amount of 0.5 ml each time. The control sample was sprayed with water used to make extracts. Three days after each application, the plants were collected and the following were measured: root length, plant height and the weight of roots and above-ground parts. The application of the biostimulator in the form of spraying stimulated the development of plants, which allowed to obtain taller plants with a better developed root system compared to the control combination. The measured parameters are shown in the table below (control = 100%).

| App | Measurement after the first spraying | | | | Measurement after the second spraying | | | |
|---|---|---|---|---|---|---|---|---|
| | Root lengt h | Plant heigh t | Root mass | Weight of the abovegroun d part | Root lengt h | Plant heigh t | Root mass | Weight of the abovegroun d part |
| Control combination (water spray) | 100% | 100% | 100 % | 100% | 100% | 100% | 100 % | 100% |
| Spraying with a biostimulato r | 112% | 108% | 114 % | 112% | 117% | 111% | 119 % | 115% |

The essence of the plant biostimulator for intensifying plant growth and development is that it is obtained from the biomass of the above-ground parts of horsetail (*Equisetum arvense* L.), rose hips (*Rosa canina* L.) and soapwort roots (*Saponaria officinalis* L.), subjected for 30 to 90 s to microwaves with a power of 250 to 750 W generated at a low pressure of 75 to 125 Pa. From such activated plant parts, using an extractant in the form of water, a biostimulator was obtained as an infusion, using from 45.0 to 50.0 g of horsetail, from 1.5 to 3.5 g of rose hips and from 0.1 up to 0.5 g of soapwort roots per 1000 ml of water.

## Claims

1. Plant biostimulator, obtained using an extractant in the form of water, **characterized in that,** it was obtained from the biomass of the above-ground parts of horsetail (*Equisetum arvense* L.), rose hips (*Rosa canina* L.) and soapwort roots (*Saponaria officinalis* L.), exposed for 30 to 90 s to microwaves with a power of 250 to 750 W generated at low pressure of 75 to 125 Pa. From such activated plant parts, using an extractant in the form of water, a biostimulator was obtained as an infusion, using from 45.0 to 50.0 g of horsetail, from 1.5 to 3.5 g of rose hips and from 0.1 up to 0.5 g of soapwort roots per 1000 ml of water.

2. Biostimulator according to claim 1, **characterized in that,** the infusion contains macroelements in the following amounts mg/ml: Ca: 813.00±14.18 ; K: 2010.00±36.06 ; Mg: 397.67±6.03 ; Na: 5.51±0.04 ; P: 712.11±11.24 ; trace elements in the following amounts, mg/ml: Cu: 0.02±0.00 ; Fe: 0.12±0.02 ; Mn: 1.73±0.03 ; Sr: 3.24±0.03 ; Zn: 0.40±0.02 ; polyphenols, total 1299.00±21.23 mg GAE/l; amount of reducing sugars, mg GLU/l: 73.66±4.15; protein amount, mg BSA/l: 123.16±10.53; free amino acids and peptides in the amount of mg LEU/l: 445.07±74.91; proline amount, mg/l: 43.82±2.06; amount of abscisic acid , ng / l: 139.36±6.01; 3-indoleacetic acid amount, µg/l: 4.82±0.23; gibberellic acid amount, mg/l: 12.96±0.78. It has the ability to quench ABTS radicals: 1.14±0.06 mg TE/ml and quench hydroxyl radicals: 19.37±1.84 mg TE/ml, reduction power: 2.28±0.1 mg TE/ml and chelating ability: 3.22±0.12 mg/ml.

3. Biostimulator according to claim 1, **characterized in that,** the preceding extraction, activation of the plant biomass with microwaves and the use of soapwort roots in the extraction process allows obtaining the surface tension of the produced plant biostimulator with the value of: 49.36±1.43 mN /m.
